# EUROPEAN PATENT SPECIFICATION

(11) **EP 3 037 625 B1**
(45) Date of publication and mention of the grant of the patent: **10.10.2018**
(21) Application number: 15200601.1
(22) Date of filing: 16.12.2015
(51) Int. Cl.: F01D 5/28, F01D 5/30, F01D 5/34, F04D 29/32, F04D 29/64, B23P 15/00

(54) **TURBINE WHEEL WITH COMPOSITE BLADED RING**
TURBINENRAD MIT ZUSAMMENGESETZTEM BESCHAUFELTEM KRANZ
ROUE DE TURBINE AVEC UN ANNEAU AUBAGÉ COMPOSITE

(30) Priority: 22.12.2014 US 201462095153 P
(43) Date of publication of application: 29.06.2016
(73) Proprietor: Rolls-Royce Corporation, Indianapolis, IN 46225 (US); Rolls-Royce North American Technologies, Inc., Indianapolis, IN 46241 (US)
(72) Inventor: Walston, Jeffrey, A., Indianapolis, IN 46220 (US); Vetters, Daniel, Kentl, Indianapolis, IN 46234 (US); Freeman, Ted, J., Danville, IN 46122 (US)
(74) Representative: Dauncey, Mark Peter

(56) References cited:
- EP-A2- 2 090 752
- WO-A2-98/08370
- DE-A1-102010 007 335
- US-A1- 2013 156 594

## Description

### FIELD OF THE DISCLOSURE

The present disclosure relates generally to gas turbine engines, and more specifically to composite blade attachment.

### BACKGROUND

Gas turbine engines are used to power aircraft, watercraft, power generators, and the like. Gas turbine engines typically include a compressor, a combustor, and a turbine. The compressor compresses air drawn into the engine and delivers high pressure air to the combustor. In the combustor, fuel is mixed with the high pressure air and is ignited. Products of the combustion reaction in the combustor are directed into the turbine where work is extracted to drive the compressor and, sometimes, an output shaft. Left-over products of the combustion are exhausted out of the turbine and may provide thrust in some applications.

To withstand heat from the combustion products received from the combustor, the turbine may include blades made from ceramic-matrix composite materials that are able to interact with the hot combustion products. In some turbine wheels, the blades may be coupled to a metallic disk that supports the blades in a gas path leading out of the combustor. Coupling of the blades made from ceramic-matrix composite materials with metallic disks can present design challenges.

DE 10 2010 007 335 A1 describes a turbine for use in a steam turbine engine comprising a bladed ring with feet for fastening the ring to a wheel with grooves, wherein the wheel is connected to the turbine shaft and the feet have a t-shaped cross section. EP 2 090 752 A2 describes a process for manufacturing a turbine disk using a composite material, wherein the composite material has at least a first and second material. The first and second materials have differing coefficient of thermal expansion, stress value, and oxidization resistance. WO 98/08370 A2 discloses a method for manufacturing a composite turbine rotor wherein blade coupons are fabricated from flat braided fabrics with axially extending fibers which are woven between the plies of polar woven fabric to make up the body of the rotor. US 2013/0156594 A1 discloses a composite gas turbine engine structure including a retention ring with airfoils mounted on, integral with, and extending radially away from the retention ring.

### SUMMARY

According to an aspect of the present disclosure, a turbine wheel for a gas turbine engine is provided according to claim 1.

In illustrative embodiments, the ring may be unitary and the key may be positioned to slide in a radial direction within the slot such that the disk may expand relative to the ring.

In illustrative embodiments, the ring may be formed to include an outer radius and a thickness such that a gap is positioned between the ring and the disk to allow radial expansion of the disk relative to the ring.

In illustrative embodiments, the key may have a generally rectangular shape when viewed along the central axis.

In illustrative embodiments, the ring may resist centrifugal loads placed on the ring independent of the disk during rotation of the disk and composite-bladed ring about the central axis.

In illustrative embodiments, the centrifugal loads may be carried as hoop stress in the ring.

In illustrative embodiments, the composite blade and ring may be formed as a unitary structure.

In illustrative embodiments, the key and ring may be formed as a unitary structure.

In illustrative embodiments, the ring may be formed to include a dovetail slot that extends through the ring in an axial direction from a forward side to an aft side of the ring and inwardly in a radial direction from an outer radius of the ring toward the central axis, and wherein the composite blade is formed to include an airfoil that extends outwardly in a radial direction from the outer radius of the ring and a root that extends into the dovetail slot of the ring to retain the blade to the ring.

In illustrative embodiments, the composite blade may be further formed to include a platform positioned between the airfoil and root.

According to another aspect of the present disclosure, a method of assembling a turbine wheel is provided according to claim 8.

In illustrative embodiments, the blades may be integral with the ring to form a unitary structure.

Other features of the present disclosure will become more apparent from the following description of the illustrative embodiments.

### BRIEF DESCRIPTION OF THE DRAWINGS

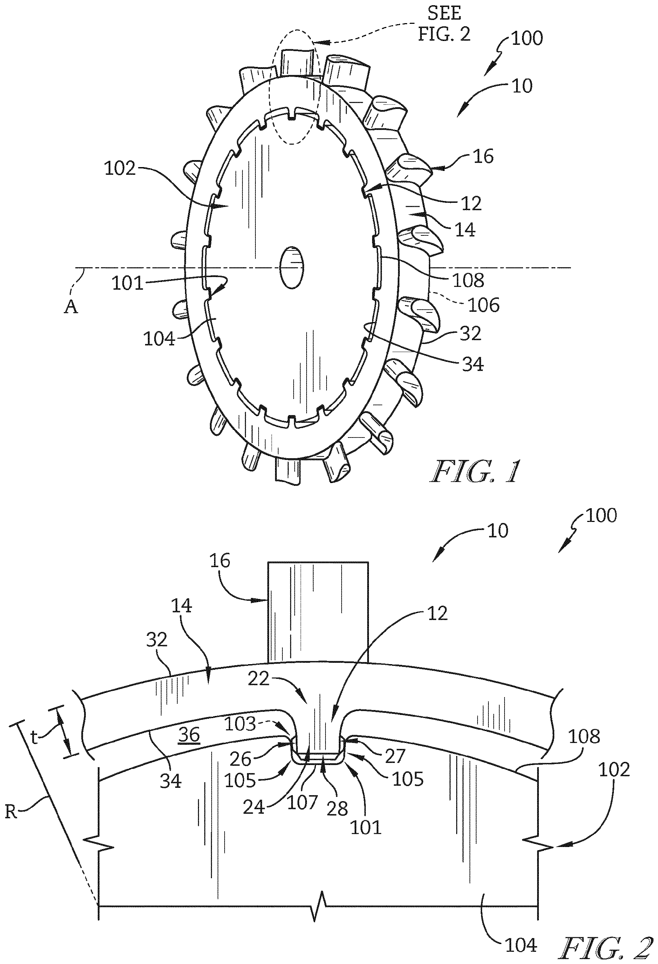

Fig. 1 is a partial perspective view of a first embodiment of a turbine wheel in accordance with the present disclosure adapted for use in a gas turbine engine showing that the turbine wheel includes a composite-bladed ring and a rotor disk having a plurality of slots to receive a plurality of cross keys of the composite-bladed ring to couple the composite-bladed ring with the rotor disk for rotation about a central axis of the gas turbine engine;
Fig. 2 is an enlarged front elevation view of the turbine wheel of Fig. 1 showing that the composite-bladed ring includes a ring of ceramic matrix material positioned at a radius (R) from the central axis and having a thickness (t) and blade airfoils formed integrally with the ring;

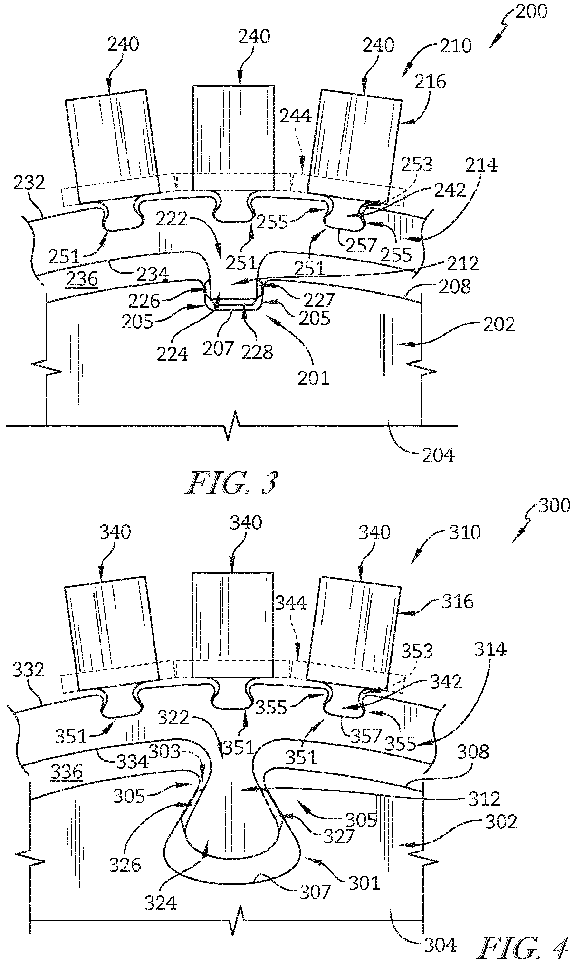

Fig. 3 is an enlarged front elevation view of a second embodiment of a turbine wheel in accordance with the present disclosure adapted for use in the gas turbine engine showing that the turbine wheel includes a rotor disk and a composite-bladed ring having a ring of ceramic matrix material with blade airfoils dovetailed to the ring and cross keys which interact with slots of the rotor disk to maintain circumferential alignment of the composite-bladed ring; and
Fig. 4 is an enlarged front elevation view of a third embodiment of a turbine wheel in accordance with the present disclosure adapted for use in the gas turbine engine showing that the turbine wheel includes a rotor disk and a composite-bladed ring having a ring of ceramic matrix material with blade airfoils dovetailed to the ring and roots positioned to engage dovetail slots of the rotor disk to assist in managing centrifugal loads placed on the composite-bladed ring and maintain circumferential alignment of the composite-bladed ring with the rotor disk.

### DETAILED DESCRIPTION OF THE DRAWINGS

For the purposes of promoting an understanding of the principles of the disclosure, reference will now be made to a number of illustrative embodiments illustrated in the drawings and specific language will be used to describe the same.

An illustrative turbine wheel 100 adapted for use in a gas turbine engine is shown in Figs. 1 and 2. The turbine wheel 100 includes a rotor disk 102 and a composite-bladed ring 10. In accordance with the present disclosure, the composite-bladed ring 10 is attached to the rotor disk 102 for rotation with the rotor disk 102 about a central axis A of the gas turbine engine.

The rotor disk 102 is illustratively made from a metallic superalloy (e.g. Inconel, Waspalloy, etc.) and includes a forward side 104 facing toward a front of the gas turbine engine, an aft side 106 facing toward a rear of the engine, and a radial surface 108 defining an outer diameter of the rotor disk 102 as shown in Figs. 1 and 2. The rotor disk 102 is additionally formed to include a plurality of slots 101. In other embodiments, the rotor disk 102 may be made from other metallic or non-metallic materials.

Each slot 101 (sometimes called a key way) extends inwardly in the radial direction from the radial surface 108 of the rotor disk 102 as shown in Fig. 2. Further, each slot 101 extends through the rotor disk 102 from the forward side 104 to the aft side 106. The slots 101 are positioned to engage with cross keys 12 of the composite-bladed ring 10 to couple the composite-bladed ring 10 with the rotor disk 102 to form the turbine wheel 100.

Cover plates may be coupled to the rotor disk 102 on the forward and aft sides of the slots 101 to assist in retaining the cross keys 12 within the slots 101. The cover plates may be attached by various methods including, but not limited to, welding or brazing, adhesives, or mechanical fasteners to name a few.

The composite-bladed ring 10 of the exemplary embodiment is made from a ceramic-matrix composite material adapted to withstand high temperature combustion products discharged onto the composite-bladed ring 10. The composite-bladed ring 10 illustratively comprises silicon-carbide reinforcements suspended in silicon-carbide matrix material. In other embodiments, other reinforcements and other ceramic-containing matrix materials may be included in the composite-bladed ring 10.

The composite-bladed ring 10 is formed to include a mounting ring 14, the cross keys 12 extending radially inward from the mounting ring 14, and a plurality of blade airfoils 16 extending radially outward from the mounting ring 14 as shown in Fig. 2. The blade airfoils 16 are aerodynamically shaped to interact with gases moving over the composite-bladed ring 10. The cross keys 12 and blade airfoils 16 are coupled to the mounting ring 14 such that gases passing over the blade airfoils 16 are blocked from moving down around the cross keys 12 as suggested in Fig. 1. The mounting ring 14 protects the radial surface 108 of the disk 102 from heat and radiation generated by the hot gases flowing over the blade airfoils 16.

In the illustrative embodiment, the mounting ring 14 includes an outer circumferential surface 32 and an inner circumferential surface 34 spaced apart from the outer circumferential surface 32 to define a thickness t of the mounting ring 14 as suggested in Fig. 2. The outer circumferential surface 32 is spaced at a radius R from the central axis A such that a gap 36 is formed between the inner circumferential surface 34 of the mounting ring 14 and the radial surface 108 of the disk 102. The gap 36 may allow for radial expansion of the disk 102 relative to the composite-bladed ring 10. The gap 36 may also facilitate cooling of the outer diameter of the disk 102 via cooling air present in the gap 26. In one embodiment, cooling air passes through the gap 36 to cool the composite-bladed ring 10 and disk 102.

The cross keys 12 include a coupler end 22 for connecting the cross keys 12 to the inner circumferential surface 34 of the mounting ring 14 and an aligner end 24 extending radially inward from the coupler end 22 for positioning within the slots 101 as shown in Fig. 2. The slots 101 of the rotor disk 102 include outwardly extending walls 105 defining a radially-facing opening 103 of the slot 101 and an inner surface 107 connecting the walls 105. The outwardly extending walls 105 are positioned to engage the cross keys 12 to maintain alignment of the composite-bladed ring 10 with the rotor disk 102. The inner surface 107 is spaced from the aligner end 24 of the cross key to allow relative radial expansion of the disk 102 and composite-bladed ring 10.

Compliant pads 26, 27, 28 are coupled to the aligner end 24 of the cross keys 12 and positioned for engagement with the outwardly extending walls 105 and inner surface 107 as suggested in Fig. 2. In some embodiments, no compliant pads are used. The compliant pads 26, 27, 28 have a compliance greater than both the disk 102 and the composite bladed ring 10 and are positioned to distribute contact loads placed on the cross keys 12 by the rotor disk 102 to reduce stress fields by spreading the contact load over a larger area of the cross key 12. Distribution of such contact loads reduces the chance for cracks or other failures to occur in the cross keys 12.

The compliant pads 26, 27, 28 may act as a seal against the outwardly extending walls 105 to block cooling air flowing through the gap 36 from passing into the slots 101 and around the cross keys 12 as suggested in Fig. 2. The compliant pads 26, 27, 28 may also act as thermal barriers to limit heat transfer to the disk 102. The compliant pads 26, 27, 28 provide wear resistance to the cross keys 12 and act as a barrier to prevent diffusion of chemicals, such as Silicon, from the cross keys 12 into the disk 102. The compliant pads 26, 27, 28 may be machined to match a profile of the slot 101 and limit the amount of post-processing required to form the cross keys 12. Using the compliant pads 26, 27, 28 reduces the required tolerances on the shape of the cross keys 12.

The compliant pads 26, 27, 28 may be integrally formed with the cross keys 12 or attached separately. By way of non-limiting example, compliant layers compliant pads 26, 27, 28 may be directly applied, bonded, or otherwise attached to cross keys 12 through brazing, electroless deposition, spray coating, chemical vapor deposition, or plasma spraying, just to provide a few non-limiting examples. One or more adhesives and/or mechanical connections, amongst other possibilities, used to attach (in whole or in part) compliant pads 26, 27, 28 to the cross keys 12 are also possible. For example, the compliant pads 26, 27, 28 may be captured in a pocket formed in the cross keys 12 such that the compliant pads 26, 27, 28 are retained to the cross keys 12 and have an exposed surface for engaging the walls 105 of the slot 101. The compliant pads 26, 27, 28 may be formed from a metallic material such as steel, an alloy, or a superalloy, as non-limiting examples.

In the illustrative embodiment, the cross keys 12 pass into the slots 101 of the rotor disk 102 through either the forward or aft end of the slot 101 as suggested in Figs. 1 and 2. The mounting ring 14 may be formed as a unitary structure forming an annular hoop around the rotor disk 102. The mounting ring 14 counteracts centrifugal forces exerted on the composite-bladed ring 10 during operation of the gas turbine engine by distributing the load as hoop stress. However, the mounting ring 14 may be formed from a plurality of discrete segments coupled and sealed together to form a hoop around the rotor disk 102.

Another illustrative turbine wheel 200 adapted for use in the gas turbine engine is shown in Fig. 3. The turbine wheel 200 includes a rotor disk 202 (only a portion of which is shown) and a composite-bladed ring 210 (only a portion of which is shown). In accordance with the present disclosure, the composite-bladed ring 210 is attached to the rotor disk 202 for rotation with the rotor disk 202 about a central axis of the gas turbine engine.

The rotor disk 202 is illustratively made from a metallic superalloy (e.g. Inconel, Waspalloy, etc.) and includes a forward side 204 facing toward a front of the gas turbine engine, an aft side facing toward a rear of the engine, and a radial surface 208 defining an outer diameter of the rotor disk 202 as shown in Fig. 3. The rotor disk 202 is additionally formed to include a plurality of slots 201 (only one of which is shown). In other embodiments, the rotor disk 202 may be made from other metallic or non-metallic materials.

Each slot 201 extends inwardly in the radial direction from the radial surface 208 of the rotor disk 202 as shown in Fig. 3. Further, each slot 201 extends through the rotor disk 202 from the forward side 204 to the aft side. The slots 201 are positioned to engage with cross keys 212 of the composite-bladed ring 210 to couple the composite-bladed ring 210 with the rotor disk 202 to form the turbine wheel 200.

Cover plates may be coupled to the rotor disk 202 on the forward and aft sides of the slots 201 to assist in retaining the cross keys 212 within the slots 201. The cover plates may be attached by various methods including, but not limited to, welding or brazing, adhesives, or mechanical fasteners to name a few.

The composite-bladed ring 210 of the exemplary embodiment is made from a ceramic-matrix composite material adapted to withstand high temperature combustion products discharged onto the composite-bladed ring 210. The composite-bladed ring 210 illustratively comprises silicon-carbide reinforcements suspended in silicon-carbide matrix material. In other embodiments, other reinforcements and other ceramic-containing matrix materials may be included in the composite-bladed ring 210.

The composite-bladed ring 210 is formed to include a mounting ring 214, the cross keys 212 (only one of which is shown) extending radially inward from the mounting ring 214, and a plurality of turbine blades 240 (only three of which are shown) positioned to extend radially outward from the mounting ring 214 as shown in Fig. 3. Each turbine blade 240 is formed to include a root 242 for coupling the turbine blade 240 to the mounting ring 214 and an airfoil 216 coupled to the root 242. The airfoils 216 are aerodynamically shaped to interact with gases moving over the composite-bladed ring 210.

Each turbine blade 240 of the exemplary embodiment is made from a ceramic-matrix composite material adapted to withstand high temperature combustion products discharged onto the blade 240. The blades 240 illustratively comprise silicon-carbide reinforcements suspended in silicon-carbide matrix material. In other embodiments, other reinforcements and other ceramic-containing matrix materials may be included in the blades 240.

In the illustrative embodiment, the mounting ring 214 includes an outer circumferential surface 232 and an inner circumferential surface 234 spaced apart from the outer circumferential surface 232 as shown in Fig. 3. The outer circumferential surface 232 is spaced at a radius from the central axis such that a gap 236 is formed between the inner circumferential surface 234 of the mounting ring 214 and the radial surface 208 of the disk 202. The gap 236 may allow for radial expansion of the disk 202 relative to the composite-bladed ring 210. In one embodiment, cooling air passes through the gap 236 to cool the composite-bladed ring 210 and disk 202.

The cross keys 212 and turbine blades 240 are coupled to the mounting ring 214 such that gases passing over the airfoils 216 are blocked from moving down around the cross keys 212 as suggested in Fig. 3. The mounting ring 214 protects the radial surface 208 of the disk 202 from heat and radiation generated by the hot gases flowing over the blades 240. The mounting ring 214 further includes a plurality of dovetail slots 251 (only three of which are shown) for engaging the roots 242 of the turbine blades 240 to hold the turbine blades 240 to the mounting ring 214. Each dovetail slot 251 extends inwardly in the radial direction from the outer circumferential surface 232. Further, each dovetail slot 251 extends through the mounting ring 214 from a forward side to an aft side and is shaped to form a dovetail shape when viewed from the front or aft sides.

The dovetail slot 251 of the mounting ring 214 illustratively includes a pair of converging blocker walls 255 forming a radially-facing opening 253 and a rounded inner surface 257 connecting the blocker walls 255. The blocker walls 255 are positioned to engage the root 242 to retain the root 242 of the turbine blade 240 within the slot 251 as suggested in Fig. 3. The rounded inner surface 257 is sized and shaped to surround the root 242. The rounded inner surface 257 may substantially match the outer profile of the root 242 in order to assist in retaining the root 242 within the dovetail slot 251.

The cross keys 212 include a coupler end 222 for connecting the cross keys 212 to the inner circumferential surface 234 of the mounting ring 214 and an aligner end 224 extending radially inward from the coupler end 222 for positioning within the slots 201 as shown in Fig. 3. The slots 201 of the rotor disk 202 include outwardly extending walls 205 defining a radially-facing opening 203 of the slot 201 and an inner surface 207 connecting the walls 205. The outwardly extending walls 205 are positioned to engage the cross keys 212 to maintain alignment of the composite-bladed ring 210 with the rotor disk 202. The inner surface 207 is spaced from the aligner end 224 of the cross key to allow relative radial expansion of the disk 202 and composite-bladed ring 210.

Compliant pads 226, 227, 228 are coupled to the aligner end 224 of the cross keys 212 and positioned for engagement with the outwardly extending walls 205 and inner surface 207 as suggested in Fig. 3. Compliant pads 26, 27, 28 are coupled to the aligner end 24 of the cross keys 12 and positioned for engagement with the outwardly extending walls 105 and inner surface 107 as suggested in Fig. 2. In some embodiments, no compliant pads are used. The compliant pads 226, 227, 228 have a compliance greater than both the disk 202 and the composite bladed ring 210 and are positioned to distribute contact loads placed on the cross keys 212 by the rotor disk 202 to reduce stress fields by spreading the contact load over a larger area of the cross key 212. Distribution of such contact loads reduces the chance for cracks or other failures to occur in the cross keys 212.

The compliant pads 226, 227, 228 may act as a seal against the outwardly extending walls 205 to block cooling air flowing through the gap 236 from passing into the slots 201 and around the cross keys 212 as suggested in Fig. 3. The compliant pads 226, 227, 228 may also act as thermal barriers to limit heat transfer to the disk 202. The compliant pads 226, 227, 228 provide wear resistance to the cross keys 212 and act as a barrier to prevent diffusion of chemicals, such as Silicon, from the cross keys 212 into the disk 202. The compliant pads 226, 227, 228 may be machined to match a profile of the slot 201 and limit the amount of post-processing required to form the cross keys 212. Using the compliant pads 226, 227, 228 reduces the required tolerances on the shape of the cross keys 212.

The compliant pads 226, 227, 228 may be integrally formed with the cross keys 212 or attached separately. By way of non-limiting example, compliant pads 226, 227, 228 may be directly applied, bonded, or otherwise attached to cross keys 212 through brazing, electroless deposition, spray coating, chemical vapor deposition, or plasma spraying, just to provide a few non-limiting examples. One or more adhesives and/or mechanical connections, amongst other possibilities, used to attach (in whole or in part) compliant pads 226, 227, 228 to the cross keys 212 are also possible. For example, the compliant pads 226, 227, 228 may be captured in a pocket formed in the cross keys 212 such that the compliant pads 226, 227, 228 are retained to the cross keys 212 and have an exposed surface for engaging the walls 205 of the slot 201. The compliant pads 226, 227, 228 may be formed from a metallic material such as steel, an alloy, or a superalloy, as non-limiting examples.

In the illustrative embodiment, the cross keys 212 pass into the slots 201 of the rotor disk 202 through either the forward or aft end of the slot 201 as suggested in Fig. 3. The mounting ring 214 may be formed as a unitary structure forming an annular hoop around the rotor disk 202. The mounting ring 214 counteracts centrifugal forces exerted on the composite-bladed ring 210 during operation of the gas turbine engine by distributing the load as hoop stress. However, the mounting ring 214 may be formed from a plurality of discrete segments coupled and sealed together to form a hoop around the rotor disk 202.

The turbine blades 240 coupled to the mounting ring 214 of the composite-bladed ring 210 experiences centrifugal loading during rotation of the turbine wheel 200 as suggested in Fig. 3. The root 242 contacts the blocker walls 255 of the slot 251 to resist the forces acting on the turbine blade 240 and maintain positioning of the root 242 within the dovetail slot 251. The turbine blades 240 may optionally include platforms 244 positioned between the airfoil 216 and root 242 such that gases passing over the airfoils 216 are blocked from moving down around the roots 242.

Another illustrative turbine wheel 300 adapted for use in the gas turbine engine is shown in Fig. 4. The turbine wheel 300 includes a rotor disk 302 (only a portion of which is shown) and a composite-bladed ring 310 (only a portion of which is shown). In accordance with the present disclosure, the composite-bladed ring 310 is attached to the rotor disk 302 for rotation with the rotor disk 302 about a central axis of the gas turbine engine.

The rotor disk 302 is illustratively made from a metallic superalloy (e.g. Inconel, Waspalloy, etc.) and includes a forward side 304 facing toward a front of the gas turbine engine, an aft side facing toward a rear of the engine, and a radial surface 308 defining an outer diameter of the rotor disk 302 as shown in Fig. 4. The rotor disk 302 is additionally formed to include a plurality of dovetail slots 301 (only one of which is shown). In other embodiments, the rotor disk 302 may be made from other metallic or non-metallic materials.

Each dovetail slot 301 extends inwardly in the radial direction from the radial surface 308 of the rotor disk 302 as shown in Fig. 4. Further, each dovetail slot 301 extends through the rotor disk 302 from the forward side 304 to the aft side. The dovetail slots 301 are positioned to engage with roots 312 of the composite-bladed ring 310 to couple the composite-bladed ring 310 with the rotor disk 302 to form the turbine wheel 300.

The dovetail slot 301 of the rotor disk 302 illustratively includes a pair of converging blocker walls 305 forming a radially-facing opening 303 and a rounded inner surface 307 connecting the blocker walls 305 as shown in Fig. 4. The blocker walls 305 are positioned to engage the root 312 to retain the root 312 of the composite-bladed ring 310 within the slot 301. The rounded inner surface 307 is sized and shaped to surround the root 312. The rounded inner surface 307 may substantially match the outer profile of the root 312 in order to assist in retaining the root 312 within the slot 301.

Cover plates may be coupled to the rotor disk 302 on the forward and aft sides of the slots 301 to assist in retaining the cross keys 312 within the slots 301. The cover plates may be attached by various methods including, but not limited to, welding or brazing, adhesives, or mechanical fasteners to name a few.

The composite-bladed ring 310 of the exemplary embodiment is made from a ceramic-matrix composite material adapted to withstand high temperature combustion products discharged onto the composite-bladed ring 310. The composite-bladed ring 310 illustratively comprises silicon-carbide reinforcements suspended in silicon-carbide matrix material. In other embodiments, other reinforcements and other ceramic-containing matrix materials may be included in the composite-bladed ring 310.

The composite-bladed ring 310 is formed to include a mounting ring 314, the roots 312 (only one of which is shown) extending radially inward from the mounting ring 314, and a plurality of turbine blades 340 (only three of which are shown) positioned to extend radially outward from the mounting ring 314 as shown in Fig. 4. Each turbine blade 340 is formed to include a root 342 for coupling the turbine blade 340 to the mounting ring 314 and an airfoil 316 coupled to the root 342. The airfoils 316 are aerodynamically shaped to interact with gases moving over the composite-bladed ring 310.

Each turbine blade 340 of the exemplary embodiment is made from a ceramic-matrix composite material adapted to withstand high temperature combustion products discharged onto the blade 340. The blades 340 illustratively comprise silicon-carbide reinforcements suspended in silicon-carbide matrix material. In other embodiments, other reinforcements and other ceramic-containing matrix materials may be included in the blades 340.

In the illustrative embodiment, the mounting ring 314 includes an outer circumferential surface 332 and an inner circumferential surface 334 spaced apart from the outer circumferential surface 332 as shown in Fig. 4. The outer circumferential surface 332 is spaced at a radius from the central axis such that a gap 336 is formed between the inner circumferential surface 334 of the mounting ring 314 and the radial surface 308 of the disk 302. The gap 336 may allow for radial expansion of the disk 302 relative to the composite-bladed ring 310. In one embodiment, cooling air passes through the gap 336 to cool the composite-bladed ring 310 and disk 302.

The roots 312 and turbine blades 340 are coupled to the mounting ring 314 such that gases passing over the airfoils 316 are blocked from moving down around the roots 312 as suggested in Fig. 4. The mounting ring 314 protects the radial surface 308 of the disk 302 from heat and radiation generated by the hot gases flowing over the blades 340. The mounting ring 314 further includes a plurality of dovetail slots 351 (only three of which are shown) for engaging the roots 342 of the turbine blades 340 to hold the turbine blades 340 to the mounting ring 314. Each dovetail slot 351 extends inwardly in the radial direction from the outer circumferential surface 332. Further, each dovetail slot 351 extends through the mounting ring 314 from a forward side to an aft side and is shaped to form a dovetail shape when viewed from the front or aft sides.

The dovetail slot 351 of the mounting ring 314 illustratively includes a pair of converging blocker walls 355 forming a radially-facing opening 353 and a rounded inner surface 357 connecting the blocker walls 355. The blocker walls 355 are positioned to engage the root 342 to retain the root 342 of the turbine blade 340 within the slot 351 as suggested in Fig. 4. The rounded inner surface 357 is sized and shaped to surround the root 342. The rounded inner surface 357 may substantially match the outer profile of the root 342 in order to assist in retaining the root 342 within the dovetail slot 351.

The roots 312 include a stem 322 for connecting the roots 312 to the inner circumferential surface 334 of the mounting ring 314 and an engagement portion 324 extending radially inward from the stem 322 for positioning within the slots 301 as shown in Fig. 4. Compliant pads 326, 327 are coupled to the engagement portion 324 of the roots 312 and positioned for engagement with the blocker walls 305. Compliant pads 26, 27, 28 are coupled to the aligner end 24 of the cross keys 12 and positioned for engagement with the outwardly extending walls 105 and inner surface 107 as suggested in Fig. 2. In some embodiments, no compliant pads are used. The compliant pads 326, 327 are positioned to distribute contact loads placed on the roots 312 by the rotor disk 302 to reduce stress fields by spreading the contact load over a larger area of the cross key 312. Distribution of such contact loads reduces the chance for cracks or other failures to occur in the roots 312.

The compliant pads 326, 327 may act as a seal against the blocker walls 305 to block cooling air flowing through the gap 336 from passing into the dovetail slots 301 and around the roots 312 as suggested in Fig. 4. The compliant pads 326, 327 may also act as thermal barriers to limit heat transfer to the disk 302. The compliant pads 326, 327 provide wear resistance to the roots 312 and act as a barrier to prevent diffusion of chemicals, such as Silicon, from the roots 312 into the disk 302. The compliant pads 326, 327 may be machined to match a profile of the dovetail slot 301 and limit the amount of post-processing required to form the roots 312. Using the compliant pads 326, 327 reduces the required tolerances on the shape of the roots 312.

The compliant pads 326, 327 may be integrally formed with the roots 312 or attached separately. By way of non-limiting example, compliant pads 326, 327 may be directly applied, bonded, or otherwise attached to roots 312 through brazing, electroless deposition, spray coating, chemical vapor deposition, or plasma spraying, just to provide a few non-limiting examples. One or more adhesives and/or mechanical connections, amongst other possibilities, used to attach (in whole or in part) compliant pads 326, 327 to the roots 312 are also possible. For example, the compliant pads 326, 327 may be captured in a pocket formed in the roots 312 such that the compliant pads 326, 327 are retained to the root 312 and have an exposed surface for engaging the blocker walls 305 of the dovetail slot 301. The compliant pads 326, 327 may be formed from a metallic material such as steel, an alloy, or a superalloy, as non-limiting examples.

In the illustrative embodiment, the roots 312 pass into the dovetail slots 301 of the rotor disk 302 through either the forward or aft end of the slot 301 as suggested in Fig. 4. The mounting ring 314 may be formed as a unitary structure forming an annular hoop around the rotor disk 302. The mounting ring 314 counteracts centrifugal forces exerted on the composite-bladed ring 310 during operation of the gas turbine engine by distributing the load as hoop stress. In some embodiments, the mounting ring 314 may be formed from a plurality of discrete segments coupled and sealed together to form a hoop around the rotor disk 302. Each segment may include at least one of the roots 312 to couple the segment to the rotor disk 302. The roots 312 engage the blocker walls 305 to assist in counteracting centrifugal forces applied to the mounting ring 314 and blades 340.

The turbine blades 340 coupled to the mounting ring 314 of the composite-bladed ring 310 experiences centrifugal loading during rotation of the turbine wheel 300 as suggested in Fig. 4. The root 342 contacts the blocker walls 355 of the slot 351 to resist the forces acting on the turbine blade 340 and maintain positioning of the root 342 within the dovetail slot 351. The turbine blades 340 may optionally include platforms 344 positioned between the airfoil 316 and root 342 such that gases passing over the airfoils 316 are blocked from moving down around the roots 342.

While the disclosure has been illustrated and described in detail in the foregoing drawings and description, the same is to be considered as exemplary and not restrictive in character, it being understood that only illustrative embodiments thereof have been shown and described and that all changes and modifications that come within the spirit of the disclosure as defined by the claims are desired to be protected.

## Claims

1. A turbine wheel (100, 200) for a gas turbine engine, the turbine wheel comprising
a metallic disk (102, 202) formed to include a slot (101, 201) that extends through the disk in an axial direction from a forward side (104, 204) to an aft side (106) of the disk and inwardly in a radial direction from an outer radius of the disk toward a central axis (A), and
a composite-bladed ring (10, 210) including a ring (14, 214) positioned to surround the outer radius of the disk, a key (12, 212) extending radially inward of the ring and positioned to engage the slot to maintain circumferential alignment of the ring with the disk during rotation of the metallic disk, and a composite blade (16, 240) coupled to the ring and extending radially outward from the ring,
wherein the ring is formed to include an outer radius (R) and a thickness (t) such that a gap (36, 236) is positioned between the ring and the disk to allow radial expansion of the disk relative to the ring.

2. The turbine wheel of claim 1, wherein the ring is unitary and the key is positioned to slide in a radial direction within the slot such that the disk may expand relative to the ring.

3. The turbine wheel of claim 2, wherein the key has a generally rectangular shape when viewed along the central axis.

4. The turbine wheel of claim 2, wherein the ring resists centrifugal loads placed on the ring independent of the disk during rotation of the disk and composite-bladed ring about the central axis; optionally wherein the centrifugal loads are carried as hoop stress in the ring.

5. The turbine wheel of claim 1, wherein the ring, the key, and the composite blade are formed as a unitary structure.

6. The turbine wheel of claim 1, further comprising at least one compliant pad (26, 27, 28) having a compliance greater than the metallic disk and the composite bladed ring, the at least one compliant pad arranged in the slot between the metallic disk and the composite bladed ring so that the compliant pad is configured to distribute contact loads between the metallic disk and the composite-bladed ring.

7. The turbine wheel of claim 1, wherein the ring is formed to include a dovetail slot (251) that extends through the ring in an axial direction from a forward side to an aft side of the ring and inwardly in a radial direction from an outer radius of the ring toward the central axis, and wherein the composite blade (240) is formed to include an airfoil (216) that extends outwardly in a radial direction from the outer radius of the ring and a root (242) that extends into the dovetail slot of the ring to retain the blade to the ring; optionally wherein the composite blade is further formed to include a platform (244) positioned between the airfoil and root.

8. A method of assembling a turbine wheel (100, 200) comprising
positioning a composite-bladed ring (10, 210) relative to a disk (102, 202), the composite-bladed ring including a ring (14, 214) positioned to surround an outer radius of the disk, a key (12, 212) extending radially inward of the ring, and a composite blade (16, 240) coupled to the ring and extending radially outward from the ring, and
engaging the key with a slot (101, 201) formed in the disk to maintain circumferential alignment of the ring with the disk during rotation of the composite-bladed ring and disk about a central axis,
wherein the ring is formed to include an outer radius (R) and a thickness (t) such that a gap (36, 236) is positioned between the ring and the disk to allow radial expansion of the disk relative to the ring.

9. The method of claim 8, wherein the blades are integral with the ring to form a unitary structure.

## Patentansprüche

1. Turbinenrad (100, 200) für einen Gasturbinenmotor, bei welchem das Turbinenrad Folgendes beinhaltet;
eine Metallscheibe (102, 202), gebildet zum beinhalten eines Schlitzes (101, 201), welcher sich durch die Scheibe in einer axialen Richtung von einer vorderen Seite (104, 204) zu einer hinteren Seite (106) der Scheibe und einwärts in einer radialen Richtung von einem äußeren Radius der Scheibe in Richtung einer Mittelachse (A) erstreckt, und
einen Kranz mit Verbundschaufeln (10, 210), welcher einen Ring (14, 214) beinhaltet, welcher positioniert ist, um den äußeren Radius der Scheibe zu umgreifen, wobei ein Schlüssel (12, 212) sich radial einwärts vom Ring erstreckt und positioniert ist, um mit dem Schlitz in Eingriff zu gehen, um die Umfangsflucht des Rings mit der Scheibe beim Drehen der Metallscheibe aufrechtzuerhalten, und eine Verbundschaufel (16, 240) mit dem Ring gekoppelt ist und sich vom Ring radial auswärts erstreckt,
wobei der Ring gebildet ist, um einen äußeren Radius (R) und eine solche Dicke (t) zu enthalten, dass zwischen dem Ring und der Scheibe ein Spalt (36, 236) positioniert ist, um radiale Ausdehnung der Scheibe in Bezug auf den Ring zuzulassen.

2. Turbinenrad nach Anspruch 1, bei welchem der Ring einstückig ist und der Schlüssel positioniert ist, um in einer radialen Richtung innerhalb des Schlitzes zu gleiten in der Weise, dass die Scheibe sich in Bezug auf den Ring ausdehnen kann.

3. Turbinenrad nach Anspruch 2, bei welchem der Schlüssel eine allgemein rechteckige Form besitzt, wenn er entlang der Mittelachse betrachtet wird.

4. Turbinenrad nach Anspruch 2, bei welchem der Ring Zentrifugallasten standhält, welche am Ring unabhängig von der Scheibe beim Drehen der Scheibe und des Kranzes mit Verbundschaufeln um die Mittelachse platziert sind; optionsweise, bei welchem die Zentrifugallasten als Umfangsspannung im Ring getragen werden.

5. Turbinenrad nach Anspruch 1, bei welchem der Ring, der Schlüssel und die Verbundschaufel als eine einstückige Struktur gebildet sind.

6. Turbinenrad nach Anspruch 1, zudem beinhaltend mindestens ein nachgiebiges Kissen (26, 27, 28), welches eine größere Nachgiebigkeit besitzt als die Metallscheibe und der Kranz mit Verbundschaufeln, wobei das mindestens eine nachgiebige Kissen in dem Schlitz zwischen der Metallscheibe und dem Kranz mit Verbundschaufeln in der Weise angeordnet ist, dass das nachgiebige Kissen konfiguriert ist, Kontaktlasten zwischen der Metallscheibe und dem Kranz mit Verbundschaufeln zu verteilen.

7. Turbinenrad nach Anspruch 1, bei welchem der Ring geformt ist, um einen Schwalbenschwanzschlitz (251) zu enthalten, welcher sich durch den Ring in einer axialen Richtung von einer vorderen Seite zu einer hinteren Seite des Rings und einwärts in einer radialen Richtung von einem äußeren Radius des Rings in Richtung einer Mittelachse erstreckt, und wobei die Verbundschaufel (240) gebildet ist, um ein Tragflächenprofil (216) zu enthalten, welches sich auswärts in einer radialen Richtung vom äußeren Radius des Rings erstreckt und eine Wurzel (242), welche sich in den Schwalbenschwanzschlitz des Rings erstreckt, um die Schaufel am Kranz zurückzuhalten; wobei optionsweise die Verbundschaufel zudem gebildet ist, um eine Plattform (244) zu enthalten, welche zwischen dem Tragflächenprofil und der Wurzel positioniert ist.

8. Verfahren zur Montage eines Turbinenrades (100, 200), Folgende Schritte beinhaltend:
Positionieren eines Kranzes mit Verbundschaufeln (10, 210) in Bezug auf eine Scheibe (102, 202), wobei der Kranz mit Verbundschaufeln einen Ring (14, 214) beinhaltet, welcher positioniert ist, um einen äußeren Radius der Scheibe zu umgreifen, einen Schlüssel (12, 212), welcher sich radial einwärts vom Ring erstreckt, und eine Verbundschaufel (16, 240),welche mit dem Ring gekoppelt ist und sich radial auswärts vom Ring erstreckt, und
Ineingriffbringen des Schlüssels mit einem Schlitz (101, 201), welcher in der Scheibe gebildet ist, um die Umfangsflucht des Rings mit der Scheibe beim Drehen des Kranzes mit Verbundschaufeln und der Scheibe um eine Mittelachse aufrecht zu erhalten,
wobei der Ring gebildet ist, um einen äußeren Radius (R) und eine solche Dicke (t) zu enthalten, dass zwischen dem Ring und der Scheibe ein Spalt (36, 236) positioniert ist, um radiale Ausdehnung der Scheibe in Bezug auf den Ring zuzulassen.

9. Verfahren nach Anspruch 8, bei welchem die Schaufeln integral mit dem Ring geformt sind, um eine einstückige Struktur zu bilden.

## Revendications

1. Roue de turbine (100, 200) pour une turbine à gaz, la roue de turbine comprenant :
un disque métallique (102, 202) qui est formé de manière à ce qu'il inclue une fente (101, 201) qui s'étend au travers du disque dans une direction axiale depuis un côté avant (104, 204) jusqu'à un côté arrière (106) du disque et vers l'intérieur dans une direction radiale depuis un rayon externe du disque en direction d'un axe central (A) ; et
un anneau à aube(s) composite(s) (10, 210) qui inclut un anneau (14, 214) qui est positionné de manière à ce qu'il entoure le rayon externe du disque, une clavette (12, 212) qui s'étend radialement vers l'intérieur de l'anneau et qui est positionnée de manière à ce qu'elle engage la fente afin de maintenir un alignement circonférentiel de l'anneau avec le disque pendant la rotation du disque métallique, et une aube composite (16, 240) qui est couplée à l'anneau et qui s'étend radialement vers l'extérieur depuis l'anneau ;
dans laquelle l'anneau est formé de manière à ce qu'il inclue un rayon externe (R) et une épaisseur (t) de telle sorte qu'un espace (36, 236) soit positionné entre l'anneau et le disque pour permettre une dilatation radiale du disque par rapport à l'anneau.

2. Roue de turbine selon la revendication 1, dans laquelle l'anneau est unitaire et la clavette est positionnée de manière à ce qu'elle coulisse dans une direction radiale à l'intérieur de la fente de telle sorte que le disque puisse se dilater par rapport à l'anneau.

3. Roue de turbine selon la revendication 2, dans laquelle la clavette présente une forme générale rectangulaire telle que vue suivant l'axe central.

4. Roue de turbine selon la revendication 2, dans laquelle l'anneau résiste à des charges centrifuges qui sont placées sur l'anneau indépendamment du disque pendant la rotation du disque et de l'anneau à aube(s) composite(s) autour de l'axe central ; en option, dans laquelle les charges centrifuges sont supportées en tant que tension de charge dans l'anneau.

5. Roue de turbine selon la revendication 1, dans laquelle l'anneau, la clavette et l'aube composite sont formés en tant que structure unitaire.

6. Roue de turbine selon la revendication 1, comprenant en outre au moins un tampon élastique (26, 27, 28) qui présente une élasticité qui est supérieure à celles du disque métallique et de l'anneau à aube(s) composite(s), l'au moins un tampon élastique étant agencé dans la fente entre le disque métallique et l'anneau à aube(s) composite(s) de telle sorte que le tampon élastique soit configuré de manière à ce qu'il distribue des charges de contact entre le disque métallique et l'anneau à aube(s) composite(s).

7. Roue de turbine selon la revendication 1, dans laquelle l'anneau est formé de manière à ce qu'il inclue une fente en queue d'aronde (251) qui s'étend au travers de l'anneau dans une direction axiale depuis un côté avant jusqu'à un côté arrière de l'anneau et vers l'intérieur dans une direction radiale depuis un rayon externe de l'anneau en direction de l'axe central, et dans laquelle l'aube composite (240) est formée de manière à ce qu'elle inclue une surface profilée aérodynamique (216) qui s'étend vers l'extérieur dans une direction radiale depuis le rayon externe de l'anneau et une racine (242) qui s'étend à l'intérieur de la fente en queue d'aronde de l'anneau de manière à retenir l'aube sur l'anneau ; en option, dans laquelle l'aube composite est en outre formée de manière à ce qu'elle inclue une plate-forme (244) qui est positionnée entre la surface profilée aérodynamique et la racine.

8. Procédé d'assemblage d'une roue de turbine (100, 200) comprenant :
le positionnement d'un anneau à aube(s) composite(s) (10, 210) par rapport à un disque (102, 202), l'anneau à aube(s) composite(s) incluant un anneau (14, 214) qui est positionné de manière à ce qu'il entoure un rayon externe du disque, une clavette (12, 212) qui s'étend radialement vers l'intérieur de l'anneau et une aube composite (16, 240) qui est couplée à l'anneau et qui s'étend radialement vers l'extérieur de l'anneau ; et
l'engagement de la clavette avec une fente (101, 201) qui est formée dans le disque de manière à maintenir un alignement circonférentiel de l'anneau avec le disque pendant la rotation de l'anneau à aube(s) composite(s) et du disque autour d'un axe central ;
dans lequel l'anneau est formé de manière à ce qu'il inclue un rayon externe (R) et une épaisseur (t) de telle sorte qu'un espace (36, 236) soit positionné entre l'anneau et le disque pour permettre une dilatation radiale du disque par rapport à l'anneau.

9. Procédé selon la revendication 8, dans lequel les aubes sont d'un seul tenant avec l'anneau de manière à former une structure unitaire.
